# EUROPEAN PATENT APPLICATION

(11) **EP 4 783 592 A1**
(43) Date of publication of application: **29.07.2026**
(21) Application number: 24867462.4
(22) Date of filing: 18.09.2024
(51) Int. Cl.: H04N 21/431

(54) **LIVESTREAMING ROOM DATA DISPLAY METHOD AND APPARATUS, AND DEVICE, MEDIUM AND PROGRAM PRODUCT**

(30) Priority: 18.09.2023 CN 202311204447
(71) Applicant: Beijing Zitiao Network Technology Co., Ltd., Beijing 100190 (CN)
(72) Inventor: QI, Ziyi, Beijing 100028 (CN); WU, Xuekai, Beijing 100028 (CN); XIAO, Zicong, Beijing 100028 (CN); SUN, Xia, Beijing 100028 (CN); WU, Xuheng, Beijing 100028 (CN); ZHANG, Liang, Beijing 100028 (CN); QIU, Yitao, Beijing 100028 (CN); WANG, Zetao, Beijing 100028 (CN)
(74) Representative: Grünecker Patent- und Rechtsanwälte PartG mbB
(86) International application number: PCT/CN2024/119486
(87) International publication number: WO 2025/061054

(57) **Abstract**

Embodiments of the disclosure provide a method, an apparatus, a device, a medium and a program product. The method includes: displaying, in response to a live start operation, a live streaming picture of a current user in a live streaming page, where the current user is a streamer of a live stream corresponding to the live streaming page; displaying, in response to a data displaying operation, a data panel of the live stream in the live streaming page, where the data panel is configured to display at least part of live stream data of the live stream. By adopting the above technical solution, the embodiments of the disclosure can simplify the operations required for users to view live stream data during live streaming.

## Description

This application claims the benefit of Chinese Patent Application No. 202311204447.6, entitled "METHOD, APPARATUS, DEVICE, MEDIUM, AND PROGRAM PRODUCT FOR DISPLAYING LIVE STREAM DATA," filed on September 18, 2023, which is incorporated herein by reference in its entirety.

### FIELD

Embodiments of the present disclosure relate to the field of computers, and in particular to methods, apparatuses, devices, medium and program products for displaying live stream data.

### BACKGROUND

Currently, a streamer can perform live streaming through a live streaming application installed on a live streaming device. However, if the streamer wants to view changes in live stream data in real time during live streaming, the required operations are relatively cumbersome.

### SUMMARY

Embodiments of the present disclosure provide a method, an apparatus, a device, medium and a program product for displaying live stream data, so as to simplify the operations required for a streamer to view real-time data of a live stream during live streaming.

In a first aspect, the embodiments of the present disclosure provide a method for displaying live stream data, including: displaying, in response to a live start operation, a live streaming picture of a current user in a live streaming page, where the current user is a streamer of a live stream corresponding to the live streaming page; displaying, in response to a data displaying operation, a data panel of the live stream in the live streaming page, where the data panel is configured to display at least part of live stream data of the live stream.

In a second aspect, the embodiments of the present disclosure further provide an apparatus for displaying live stream data, including: a picture displaying module configured to display, in response to a live start operation, a live streaming picture of a current user in a live streaming page, where the current user is a streamer of a live stream corresponding to the live streaming page; and a data panel displaying module configured to display, in response to a data displaying operation, a data panel of the live stream in the live streaming page, where the data panel is configured to display at least part of live stream data of the live stream.

In a third aspect, the embodiments of the present disclosure further provide an electronic device, including: one or more processors; and a memory for storing one or more programs which, when executed by the one or more processors, cause the one or more processors to implement the method for displaying live stream data according to the embodiments of the present disclosure.

In a fourth aspect, the embodiments of the present disclosure further provide a computer readable storage medium having stored thereon a computer program that, when executed by a processor, implements the method for displaying live stream data the according to embodiments of the present disclosure.

In a fifth aspect, the embodiments of the present disclosure further provide a computer program product which, when executed by a computer, causes the computer to implement the method for displaying live stream data according to the embodiments of the present disclosure.

### BRIEF DESCRIPTION OF DRAWINGS

The above and other features, advantages, and aspects of various embodiments of the present disclosure will become more apparent from the following detailed description taken in connection with the accompanying drawings. Throughout the drawings, the same or similar reference signs refer to the same or similar elements. It should be understood that the drawings are schematic, and components and elements are not necessarily drawn to scale.
FIG. 1 is a schematic flowchart of a method for displaying live stream data provided by an embodiment of the present disclosure;
FIG. 2 is a schematic diagram of a display of a live streaming page provided by an embodiment of the present disclosure;
FIG. 3 is a schematic diagram of a display of a first data panel provided by an embodiment of the present disclosure;
FIG. 4 is a schematic diagram of a display of a second data panel provided by an embodiment of the present disclosure;
FIG. 5 is a schematic diagram of a display of an event panel provided by an embodiment of the present disclosure;
FIG. 6 is a schematic flowchart of another method for displaying live stream data provided by an embodiment of the present disclosure;
FIG. 7 is a structural block diagram of an apparatus for displaying live stream data provided by an embodiment of the present disclosure; and
FIG. 8 is a schematic structural diagram of an electronic device provided by an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be understood that the various steps described in method embodiments of the present disclosure may be performed in different orders, and/or in parallel. Further, the method embodiments may include additional steps and/or omit performing the steps as illustrated. The scope of the present disclosure is not limited in this respect.

As used herein, the term "including/comprising" and its variations are open-ended inclusions, i.e., "including but not limited to". The term "based on" refers to "based at least in part on". The term "an embodiment" refers to "at least one embodiment"; the term "another embodiment" refers to "at least one further embodiment"; the term "some embodiments" refers to "at least some embodiments". The relevant definitions of other terms will be given below.

It should be noted that the concepts such as "first", "second" and so on mentioned in the present disclosure are merely used to distinguish between different apparatuses, modules, or units, and are not intended to limit the order or a mutual dependency relationship of functions performed by these apparatuses, modules, or units.

It should be noted that the references to "one" and "a plurality of" in the present disclosure are illustrative and not limiting, and those skilled in the art should understand that, unless otherwise explicitly stated in the context, these terms should be construed as "one or more".

The names of messages or information exchanged between multiple devices in the embodiments of the present disclosure are for illustrative purposes only and are not intended to limit the scope of such messages or information.

It is to be understood that, prior to using the technical solutions disclosed in the embodiments of the present disclosure, the types, usage scope, usage scenario, and the like of personal information related to the present disclosure should be notified to users in an appropriate manner according to the relevant laws and regulations, and the authorization of users should be acquired.

For example, in response to receiving an active request of a user, prompt information is sent to the user to explicitly prompt the user that the requested operation will need to acquire and utilize personal information of the user. This allows the user to autonomously choose whether to provide the personal information to the software or hardware, such as, electronic device, application program, server, storage medium and so on, that performs operations of the technical solution of the present disclosure according to the prompt information.

As an optional but non-limiting implementation, in response to receiving the active request of the user, the manner of sending the prompt information to the user may be, for example, in the form of a pop-up window, in which the prompt information may be presented in a text form. In addition, the pop-up window may further carry a selection control for the user to choose whether to "agree" or "not agree" to provide personal information to the electronic device.

It is to be understood that the foregoing process of notification and acquiring user authorization is merely illustrative, and does not constitute limitations on the implementations of the present disclosure. Other manners that meet related laws and regulations may also be applied to the implementations of the present disclosure.

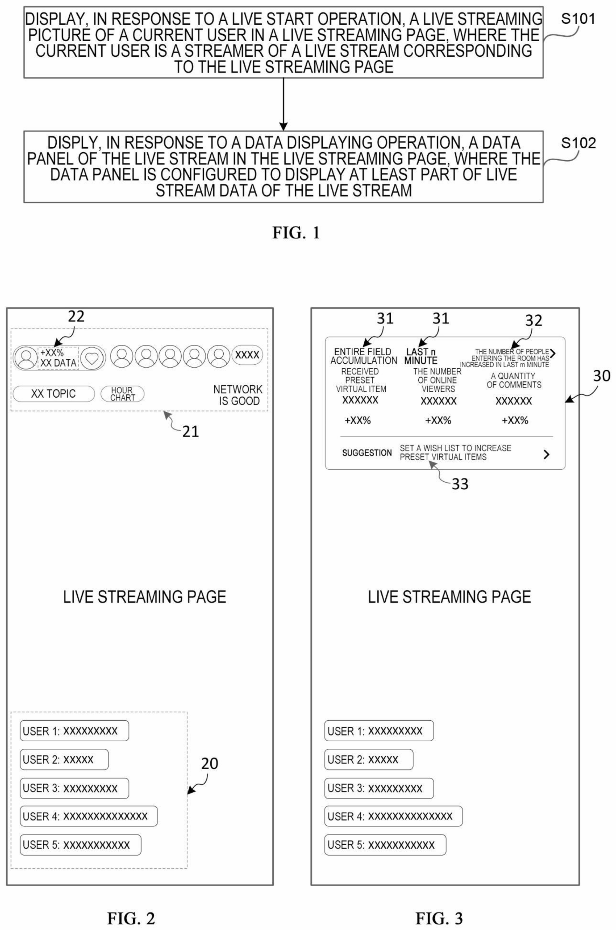

FIG. 1 is a schematic flowchart of a method for displaying live stream data according to the embodiments of the present disclosure. The method may be performed by an apparatus for displaying live stream data. The apparatus may be implemented in software and/or hardware, and may be provided in an electronic device, typically in a mobile phone or a tablet computer. The method for displaying live stream data provided in the embodiments of the present disclosure is applicable to a scenario where a streamer end displays real-time data of a live stream while performing live streaming. As shown in FIG. 1, the method for displaying live stream data provided in this embodiment may include:
S101: displaying, in response to a live start operation, a live streaming picture of a current user in a live streaming page, where the current user is a streamer of a live stream corresponding to the live streaming page.

The live start operation may be a trigger operation for indicating to start a live streaming, for example, an operation of triggering a live start control, which may be executed by the streamer (for example, the current user) when the live streaming is to be started. The live streaming page may be a page configured to display a live streaming picture of the current user. The current user may be a user currently performing live streaming in the live streaming page, for example, the streamer of the live stream corresponding to the live streaming page.

In this embodiment, the current user may perform live streaming through a current application (for example, the streamer end). Accordingly, upon receiving the live start operation from the current user, the current application may display, in response to the live start operation, the live streaming picture of the current user in the live streaming page of the current user, as shown in FIG. 2, for the current user to view. The current application may be an application that executes the method for displaying live stream data provided in this embodiment, and may be an application utilized by the current user for live streaming, for example, the streamer end.

By way of example, the current application , in response to the live start operation from the current user, may collect the live streaming picture of the current user, for example, by capturing the live streaming picture of the current user through a camera, and send the live streaming picture of the current user to a live streaming server, to send the live streaming picture of the current user through the live streaming server to a user end of a user in the live stream of the current user for display; and display the live streaming picture of the current user in the live streaming page of the current user. The live streaming server may be a server configured to receive and send the live streaming picture of the current user, and after receiving the live streaming picture sent by the current application, the live streaming server may send the live streaming picture to the user end of the user in the live stream of the current user, enabling the user end to display the live streaming picture of the current user.

Still referring to FIG. 2, the live streaming page may further display page content other than the live streaming picture of the current user, for example, interaction information and/or live stream information of the live stream. For example, the live streaming page may include an interaction information region 20 and a live streaming information region 21. The interaction information region 20 may be located at the bottom of the live streaming page, and configured to display interaction information of the live stream. The live streaming information region may be located at the top of the live streaming page, and configured to display live streaming information of the live stream. By way of example, the interaction information may be information sent by the user of the live stream in the live stream, such as comment information. The live streaming information may be information related to the live streaming, such as identification information of the streamer (e.g., avatar of the streamer, and so on), list information of the live stream, and/or network information of the live streaming, and so on. In a default case, the interaction information and the live streaming information may remain displayed within the live streaming page, for example, may be displayed on an upper layer of the live streaming picture.

S102: displaying, in response to a data displaying operation, a data panel of the live stream in the live streaming page, where the data panel is configured to display at least part of live stream data of the live stream.

The data panel may be a panel configured to display live stream data. Optionally, the data panel includes a first data panel and/or a second data panel. The first data panel may be configured to display at least part of the live stream data of the live stream. The second data panel may be configured to display data details of the live stream data of the live stream.

The live stream data may be real-time data of the live stream, which may be data that describes a live streaming details of the live stream, such as item data of virtual items received during the live streaming, audience data and/or interaction data in the live stream, and the like. The item data may include, for example, a quantity and/or a range of change in the quantity of received preset virtual items, and the like. The audience data may include a number of online viewers in the live stream and/or a range of change in the number of online viewers, and so on. The interaction data may include a number of likes, a number of viewers who give likes, a number of comments, and/or a number of viewers who comment. The live stream data may be displayed in the form of data values and/or data change curves, which are not limited in this embodiment.

By way of example, when receiving the data displaying operation of the current user (the streamer), the current application may display the data panel of the live stream in the live streaming page in response to the data displaying operation, and display at least part of the live streaming data of the live stream in the data panel.

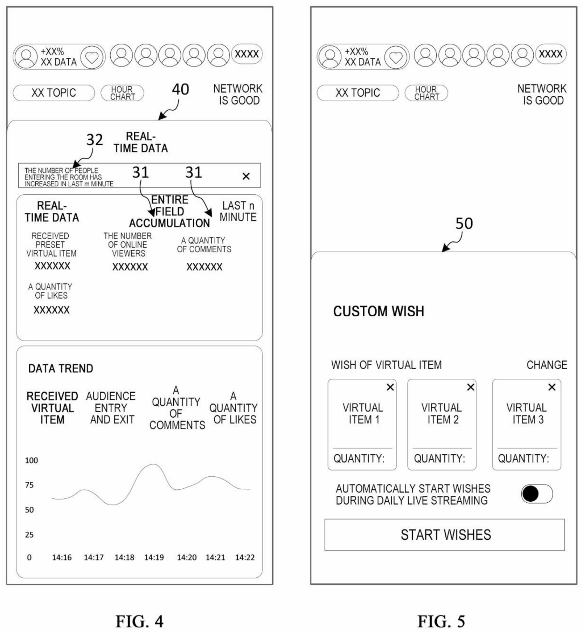

By way of example, a first data panel 30 of the live stream may be displayed in the live streaming page, and at least part of the live stream data of the live stream is displayed in the first data panel 30, for example, the live stream data corresponding to preset data item of the live stream is displayed, as shown in FIG. 3; or alternatively, a second data panel 40 of the live stream is displayed in the live streaming page, and the data details of the live stream data of the live stream are displayed in the second data panel 40, as shown in FIG. 4.

In this embodiment, at least part of the live stream data may be displayed in the data panel. In addition, as shown in FIGS. 3 and 4, the data panel may further display a display dimension control 31 of at least one live stream data, so that the current user may view the live stream data in different display dimensions by triggering different display dimension controls 31. The display dimensions of the live stream data may be set as needed. By way of example, the display dimensions of the live stream data may include a cumulative dimension for the entire session and a dimension for the last n minutes. Thus, in response to detecting that the current user triggers the display dimension control 31 corresponding to the cumulative dimension for the entire session, the live stream accumulation data of the current live streaming session of the live stream may be displayed; and in response to detecting that the current user triggers the display dimension control 31 corresponding to the dimension for the last n minutes, the live stream data of the live stream over the last n minutes may be displayed.

In this embodiment, the user may perform live streaming and view the live stream data during live streaming through the same application installed in the same device, without the need to use a device other than the live streaming device or an application other than that for live streaming to view the data. As such, operations required by the user to view the live stream data during live streaming can be simplified, and the difficulty of viewing the live stream data is reduced.

In some embodiments, prompt information, for example first prompt information and/or second prompt information, may also be displayed in the data panel to prompt the current user. In this case, optionally, the data panel further displays the first prompt information and/or the second prompt information, the first prompt information is configured to prompt data change of the live stream data, and the second prompt information is configured to prompt the current user to execute a target interaction event corresponding to the second prompt information.

The first prompt information may be prompt information configured to prompt the live stream data has changed. For example, in a case where the live stream data has a data item that has changed or a data item with data change condition meeting a preset condition, the second prompt information corresponding to the data item may be displayed in the data panel to prompt the current user. The data item may be a preset key data item, for example, item data of a preset virtual item, a number of viewers who entered the live stream, and/or a number of online viewers in the live stream, etc. It should be noted that, in a case where no key data item needs to be prompted, the second prompt information corresponding to a default data item may be displayed, for example, prompting the current user the number or proportion of viewers of the current live streaming session are from a preset recommendation manner.

The second prompt information may be prompt information configured to prompt the current user to execute a preset interaction event. The preset interaction event may be an interaction event that may be prompted through the second prompt information in a case where a corresponding prompt condition is met. The preset interaction event may be set as required. By way of example, the preset interaction event may include an interactive activity (such as a wish list) setting event, a virtual item acquisition event and/or a task (for example, an activity, etc.) participation event, and the like. The interactive activity setting event may prompt the current user in the form of second prompt information when the current user has not started the live streaming or set the interactive activity. The virtual item acquisition event may prompt the current user in the form of second prompt information in a case there is a virtual item that has not been lit in a virtual item display list of the current user. In the case where the current user receives at least one virtual item sent by a user in the live stream, the virtual item in the virtual item display list may be lit. The task participation event may prompt the current user in the form of second prompt information in a case there is a preset task that the current user has not yet signed up for. It is to be understood that in a case where no preset interaction event needs to be prompted for the current user, the second prompt information may not be displayed in the data panel.

In this embodiment, in a case where the first data panel and/or the second data panel are displayed, the first prompt information and/or the second prompt information may be displayed in the first data panel and/or the second data panel.

For example, as shown in FIG. 3 (second prompt information 33 shown in FIG. 3 is prompt information for the wish list setting event as an example), in a case where the first data panel 30 is displayed, first prompt information 32 may be displayed in the first data panel, and the first prompt information 32 prompts the current user for data change of the live stream data; and in a case there is a preset interaction event meeting a display condition of the corresponding second prompt information 33, the second prompt information 33 may be displayed in the first data panel 30 to prompt the user to execute the preset interaction event with the second prompt information 33. Here, when there are a plurality of preset interaction events meeting the display condition of the corresponding second prompt information 33, the second prompt information 33 corresponding to the plurality of preset interaction events may be displayed simultaneously, or the second prompt information 33 corresponding to different preset interaction events may be switched to be displayed, which may be set as needed.

As shown in FIG. 4, in a case where the second data panel 40 is displayed, the first prompt information 32 may be displayed in the first data panel, and the first prompt information 32 prompts the current user for the data change of the live stream data.

In the above implementation, in a case where the first data panel is displayed, the first prompt information displayed in the first data panel may be configured to trigger execution of a second data displaying operation, so that the current user may execute the second data displaying operation by triggering the first prompt information displayed in the first data panel. In this case, optionally, in a case where the first prompt information is displayed in the first data panel, the first prompt information is configured to trigger execution of the second data displaying operation. The second data displaying operation may be a trigger operation for indicating displaying the second data panel. In other words, the first prompt information displayed in the first data panel may be configured to trigger to display the second data panel.

In the above implementation, in a case where the second prompt information is displayed, the second prompt information may further be configured to trigger execution of a preset interaction event corresponding to the second prompt information. In this case, optionally, after displaying the data panel of the live stream in the live streaming page, the method further includes: displaying, in response to a third trigger operation for the second prompt information, an event panel of the target interaction event in the live streaming page, where the event panel is configured to execute the target interaction event by the current user.

The third trigger operation may be an operation of triggering the second prompt information displayed in the data panel. The target interaction event may be a preset interaction event corresponding to the second prompt information triggered by the current user. The event panel of the target interaction event may be a panel for execution of the target interaction event by the current user. In other words, the current user may execute the target interaction event in the event panel of the target interaction event. For example, in a case where the target interaction event is the interactive activity setting event, the current user may set and/or start the interactive activity in the event panel of the target interaction event; in a case where the target interaction event is the virtual item acquisition event, the current user may view and/or acquire the unlit virtual item in the event panel of the target interaction event; and in a case where the target interaction event is the task participation event, the current user may sign up for participation of and/or perform a preset task in the event panel of the target interaction event.

Specifically, when receiving the third trigger operation, for example, in response to detecting that the current user triggers the second prompt information displayed in the data panel, the current application may display the event panel 50 of the target interaction event corresponding to the second prompt information, as shown in FIG. 5 (taking an example in which the target interaction event is a wish list setting event in FIG. 5), so that the current user views and/or executes the target interaction event in the event panel.

According to the method for displaying live stream data provided in this embodiment, in response to the live start operation, the live streaming picture of the current user is displayed in the live streaming page. The current user is a streamer of the live stream corresponding to the live streaming page; in response to the data displaying operation, a data panel of the live stream is displayed in the live streaming page, where the data panel is configured to display at least part of the live stream data of the live stream. By adopting above technical solution, the embodiment enables the user to perform the live streaming while view the live stream data during live streaming, without the need to use a device other than the live streaming device or an application other than that for live streaming to view the data. As such, operations required by the user to view the live stream data during live streaming can be simplified, and the difficulty of viewing the live stream data can be reduced.

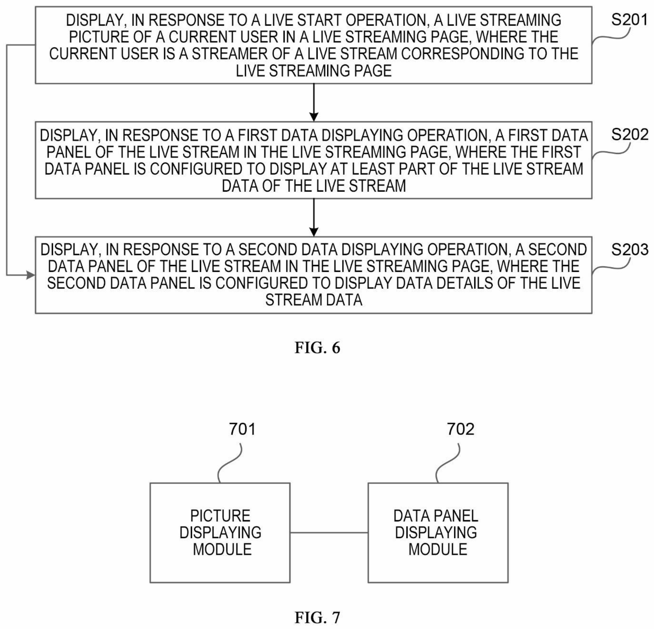

FIG. 6 is a schematic flowchart of another method for displaying live stream data according to the embodiments of the present disclosure. The solution in this embodiment may be combined with one or more optional solutions in above embodiments. Optionally, the data panel includes a first data panel and/or a second data panel, and displaying, in response to the data displaying operation, the data panel of the live stream in the live streaming page includes at least one of: displaying, in response to a first data displaying operation, a first data panel of the live stream in the live streaming page, where the first data panel is configured to display at least part of live stream data of the live stream; displaying, in response to a second data displaying operation, a second data panel of the live stream in the live streaming page, where the second data panel is configured to display data details of the live stream data.

Accordingly, as shown in FIG. 6, the method for displaying live stream data provided in this embodiment may include:
S201: displaying, in response to the live start operation, the live streaming picture of the current user in the live streaming page, and executing at least one of S202 and S203. The current user is a streamer of the live stream corresponding to the live streaming page.
S202: displaying, in response to a first data displaying operation, a first data panel of the live stream in the live streaming page, where the first data panel is configured to display at least part of the live stream data of the live stream.

The first data displaying operation may be a trigger operation configured to indicate displaying the first data panel of the live stream in the live streaming page. The implementation of the first data displaying operation is not limited. Optionally, the first data displaying operation includes a first trigger operation and/or a second trigger operation, the first trigger operation includes a swiping operation in a first direction in a preset region of the live streaming page, and the second trigger operation includes a tap operation acting on a live streaming information region of the live streaming page.

The first trigger operation may be regarded as the first data displaying operation executed in a swiping manner. The first trigger operation may include the swiping operation in the first direction in the preset region of the live streaming page. The preset region may be a preset region that displays the first data panel when swiping in the first direction. For example, in a case where the first data panel is displayed at the top of the live streaming page, the preset region may be the upper region of the live streaming page, for example, the upper half of the live streaming page. The first direction may be set as needed. By way of example, the first direction may be up, down, left, right or the like.

The second trigger operation may be the first data displaying operation executed in a non-swiping manner. The second trigger operation may be applied within the live streaming information region of the live streaming page, for example, a tap operation acting within the live streaming information region of the live streaming page. It should be understood that the second trigger operation may also include an operation other than a tap operation, for example, a touch-and-hold operation.

Optionally, the second trigger operation acts within a preset sub-region of the live streaming information region, and the preset sub-region is configured to switch to display part of the live stream data of the live stream.

The preset sub-region may be a sub-region in the live streaming information region that is configured to switch and display part of the live stream data of the live stream. In this embodiment, the part of the live stream data of the live stream may also be displayed in the preset sub-region of the live streaming information region of the live stream, for example, only displaying a certain data item in the live stream data at a time. Therefore, the current user may execute the first data displaying operation by triggering current live stream data displayed in the preset sub-region of the live streaming information region, to indicate the current application program to display the first data panel, so as to view more live stream data of the live stream in the first data panel.

By way of example, in a case where the first data displaying operation of the current user is received, for example, in response to detecting that the current user swipes in the first direction in the preset region of the live streaming page, or in response to a detection of the current user triggers the live stream data displayed within a preset sub-region 22 of the live streaming information region 21 of the live streaming page(as shown in FIG. 2), the first data panel 30 of the live stream may be displayed in the live streaming page, and at least part of the live streaming data of the live stream is displayed in the first data panel 30, as shown in FIG. 3.

In this embodiment, in a case where the first data panel is displayed in the live streaming page, the live streaming information displayed within the live streaming information region of the live streaming page may be maintained; or alternatively, the live streaming information displayed within the live streaming information region of the live streaming page may be canceled, which may be set as needed.

By way of example, if an overlapping region exists between a region where the first data panel is displayed in the live streaming page and the live streaming information region, in a case where the first data panel is displayed in the live streaming page, display of the live streaming information that is displayed in the live streaming information region of the live streaming page may be canceled. In this case, optionally, displaying the first data panel of the live stream in the live streaming page includes: displaying the first data panel of the live stream in the first panel region of the live streaming page, and canceling the display of the live streaming information displayed in the live streaming information region of the live streaming page, where the overlapping region exists between the first panel region and the live streaming information region. The first panel region may be a region where the first data panel is displayed in the live streaming page.

In some implementations, after displaying the first data panel of the live stream in the live streaming page, the method further includes: canceling the display of the first data panel, in response to a display cancelation operation for the first data panel, where the display cancelation operation includes a swiping operation in a second direction in the first data panel and/or a trigger operation on a display cancelation control of the first data panel.

In the above implementation, after displaying the first data panel in the live streaming page, the display of the first data panel may be canceled based on a display cancelation operation of the user.

The display cancelation operation may be a trigger operation configured to indicate of canceling the display of the first data panel, for example, a trigger operation for indicating closing the first data panel. The implementation of the display cancelation operation is not limited. By way of example, the display cancelation operation may include a swiping operation in a second direction in the first data panel and/or a trigger operation for a display cancelation control of the first data panel. The second direction and the first direction may be different directions, for example, the second direction may be a direction opposite to the first direction. The display cancelation control may be a control configured to trigger to cancel the display of the first data panel.

Specifically, in a case where the display cancelation operation of the current user for the first data panel is received, for example, in response to detecting that the current user swipes in the second direction in the first data panel, or in response to detecting that the current user triggers the display cancelation control of the first data panel, the display of the first data panel may be canceled. In addition, in a case where the first data panel is displayed in the live streaming page, and the display of the live streaming information displayed in the live streaming information region of the live streaming page is canceled, the live streaming information may be redisplayed in the live streaming information region of the live streaming page in response to the display cancelation operation.

S203: displaying, in response to a second data displaying operation, a second data panel of the live stream in the live streaming page, where the second data panel is configured to display data details of the live stream data.

The second data displaying operation may be a trigger operation configured to indicate displaying the second data panel of the live stream in the live streaming page. The implementation of the second data panel is not limited. For example, the second data displaying operation may be executed by the user with or without the first data panel displayed in the live streaming page. The second data displaying operation may be executed within or outside the first data panel, which may be set as required. Optionally, the second data displaying operation acts within the first data panel. For example, in a case where the first data panel is displayed in the live streaming page, the current user may switch the currently displayed data panel from the first data panel to the second data panel by executing the second data displaying operation in the first data panel.

By way of example, as shown in FIG. 4, in a case where the second data displaying operation of the current user is received, the second data panel 40 of the live stream may be displayed in the live streaming page, and the data details of the live stream data may be displayed in the second data panel 40. For example, compared with the first data panel 30, more detailed live stream data may be displayed. By way of example, more data items of the live stream data may be displayed, and/or the live stream data may be displayed in more display manners, for example, data values of the live stream data and a change curve of the live stream data may be displayed in the second data panel 40.

In this embodiment, in a case where the second data displaying operation is received, and the first data panel is displayed in the live streaming page, and when the second data panel is displayed, the display of the first data panel may remain; or the display of the first data panel may be canceled. In this case, optionally, displaying a second data panel of the live stream in the live streaming page includes: displaying a second data panel of the live stream in a second panel region of the live streaming page, and canceling the display of the first data panel. The second panel region may be a region where the second data panel is displayed in the live streaming page, and the region may be the same as or different from the first panel region. As an example, the second panel region may be a different region than the first panel region, for example, the first panel region may be a certain region located at the top of the live streaming page, and the second panel region may be a certain region located at the bottom of the live streaming page. Accordingly, the first data panel may be a top panel, and the second data panel may be a bottom panel.

According to the method for displaying live stream data provided by the embodiment, the user is enabled to view at least part of the live streaming data of the live stream in the first data panel, and/or the data details of the live stream data of the live stream in the second data panel. Thus, the manner of displaying live streaming data can be further enriched, and different requirements of the user to view the live streaming data can be met.

FIG. 7 is a structural block diagram of an apparatus for displaying live stream data according to the embodiments of the present disclosure. The apparatus may be implemented in software and/or hardware, and may be provided in an electronic device, typically, in a mobile phone or a tablet computer, and may display real-time data of a live stream while live streaming by performing the method for displaying live stream data. As shown in FIG. 7, the apparatus for displaying live stream data provided in this embodiment may include: a picture displaying module 701 and a data panel displaying module 702, where the picture displaying module 701 is configured to display, in response to a live start operation, a live streaming picture of a current user in a live streaming page, where the current user is a streamer of a live stream corresponding to the live streaming page; and the data panel displaying module 702 is configured to display, in response to a data displaying operation, a data panel of the live stream in the live streaming page, where the data panel is configured to display at least part of live stream data of the live stream.

The apparatus for displaying live stream data provided in this embodiment displays, in response to the live start operation, the live streaming picture of the current user in the live streaming page through the picture displaying module. The current user is a streamer of the live stream corresponding to the live streaming page. The data panel displaying module displays, in response to the data displaying operation, the data panel of the live stream in the live streaming page. The data panel is configured to display at least part of the live stream data of the live stream. By adopting above technical solution, the user is enabled to perform live streaming and view the live stream data during live streaming, without the need to use a device other than the live streaming device, or an application other than that for live streaming to view the data, and thus the operations required by the user to view the live stream data during live streaming can be simplified, and the difficulty of viewing the live stream data is reduced.

In the above solution, the data panel may include a first data panel and/or a second data panel, and the data panel displaying module 702 may include at least one of the following: a first panel display unit configured to display, in response to a first data displaying operation, a first data panel of the live stream in the live streaming page, where the first data panel is configured to display at least part of the live stream data of the live stream; a second panel display unit configured to display, in response to a second data displaying operation, a second data panel of the live stream in the live streaming page, where the second data panel is configured to display data details of the live stream data.

In the above solution, the first data displaying operation may include a first trigger operation and/or a second trigger operation, the first trigger operation may include a swiping operation in a first direction in a preset region of the live streaming page, and the second trigger operation may include a tap operation acting in a live streaming information region of the live streaming page.

In the above solution, the second trigger operation may act in a preset sub-region of the live streaming information region, and the preset sub-region may be configured to switch to display part of the live stream data of the live stream.

In the above solution, the first panel display unit may be configured to: display the first data panel of the live stream in a first panel region of the live streaming page, and cancel the display of the live streaming information displayed in a live streaming information region of the live streaming page, where an overlapping region exists between the first panel region and the live streaming information region.

Further, the apparatus for displaying live stream data provided in this embodiment may further include: a display cancellation module configured to cancel the display of the first data panel in response to a display cancelation operation for the first data panel, after displaying the first data panel of the live stream in the live streaming page, where the display cancelation operation includes a swiping operation in a second direction in the first data panel and/or a trigger operation for a display cancelation control of the first data panel.

In the above solution, the second data displaying operation may act in the first data panel, and the second panel display unit may include: displaying the second data panel of the live stream in a second panel region of the live streaming page, and canceling the display of the first data panel.

In the above solution, the data panel may further display first prompt information and/or second prompt information, where the first prompt information may be configured to prompt data change of the live stream data, and the second prompt information may be configured to prompt the current user to execute a target interaction event corresponding to the second prompt information.

In the above solution, the first prompt information, when displayed in the first data panel, is configured to trigger execution of the second data displaying operation.

Further, the apparatus for displaying live stream data provided in this embodiment may further include: an event panel displaying module configured to display, after displaying the data panel of the live stream in the live streaming page, and in response to a third trigger operation for the second prompt information, an event panel of the target interaction event in the live streaming page, where the event panel is configured to execute the target interaction event by the current user.

The apparatus for displaying live stream data provided by the embodiments of the present disclosure can perform the method for displaying live stream data provided by any of the embodiments of the present disclosure, and has functional modules and beneficial effects corresponding to the method for displaying live stream data. For the technical details not described in detail in this embodiment, reference may be made to the method for displaying live stream data provided by any of the embodiments of the present disclosure.

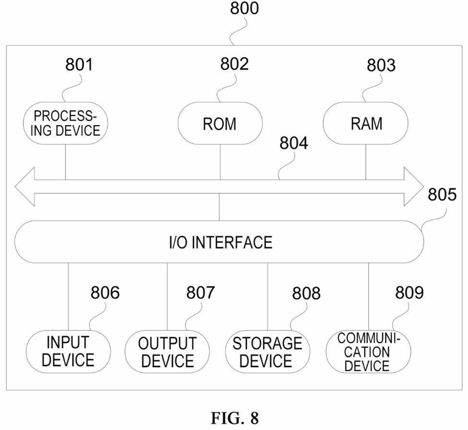

FIG. 8 is a schematic structural diagram of an electronic device 800 (for example, a terminal device) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (e.g., tablet computer), a PMP (portable multimedia player), an in-vehicle terminal (for example, an in-vehicle navigation terminal), and a fixed terminal such as a digital TV, a desktop computer, or the like. The electronic device shown in FIG. 8 is merely an example, and should not apply any limitation on the functions and scope of use of embodiments of the present disclosure.

As shown in FIG. 8, the electronic device 800 may include a processing device 801 (for example, a central processor, a graphics processor, etc.), which may perform various appropriate acts and processing according to a program stored in a read-only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) interface 805 is also connected to bus 804.

Generally, the following devices may be connected to the I/O interface 805: an input device 806 including, for example, a touch screen, a touchpad, a keyboard, a mouse, a camera, a microphone, an accelerometer, a gyroscope, and so on; an output device 807 including, for example, a liquid crystal display (LCD), a speaker, a vibrator, and so on; a storage device 808 including, for example, a magnetic tape, a hard disk, and so on; and a communication device 809. The communication device 809 may allow the electronic device 800 to communicate wirelessly or wired with other devices to exchange data. While FIG. 8 shows the electronic device 800 having various devices, it should be understood that it is not required to implement or have all of the devices shown. More or fewer devices may alternatively be implemented or provided.

In particular, according to the embodiments of the present disclosure, the process described above with reference to the flowchart may be implemented as a computer software program. For example, the embodiments of the present disclosure include a computer program product including a computer program carried on a non-transitory computer readable medium. The computer program includes a program code for performing the method shown in the flowchart. In such embodiments, the computer program may be downloaded and installed from the network through the communication device 809, or installed from the storage device 808, or from the ROM 802. When the computer program is executed by the processing device 801, the above functions specified in the method of embodiments of the present disclosure are performed.

It should be noted that the above computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, which may be used by or in combination with an instruction execution system, apparatus or device. In the present disclosure, the computer-readable signal medium may include a data signal propagated in a baseband or as a part of a carrier wave, and computer-readable program code is carried therein. This propagated data signal may take multiple forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program code contained on the computer-readable medium may be transmitted by any suitable medium, including but not limited to a wire, an optical cable, an RF (radio frequency), etc., or any suitable combination of the above.

In some implementations, the client and the server may communicate using any currently known or future developed network protocol, such as the HTTP (HyperText Transfer Protocol), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), as well as any network currently known or to be developed in the future.

The above computer-readable medium may be included in the above electronic device, or it may exist alone without being assembled into the electronic device.

The computer readable medium carries one or more programs, and when the one or more programs are executed by the electronic device, the electronic device is caused to: in response to a live start operation, display a live streaming picture of a current user in a live streaming page. The current user is a streamer of a live stream corresponding to the live streaming page; in response to a data displaying operation, a data panel of the live stream is displayed in the live streaming page, wherein the data panel is configured to display at least part of live stream data of the live stream.

The computer program code for performing the operations of the present disclosure may be written in one or more programming languages or a combination thereof, the above programming languages include but are not limited to object-oriented programming languages such as Java, Smalltalk, C++, and also conventional procedural programming languages such as "C" language or similar programming languages. The program code may be executed entirely on a user's computer, partly on a user's computer, as a stand-alone software package, partly on a user's computer and partly on a remote computer, or entirely on a remote computer or server. In the case of involving a remote computer, the remote computer may be connected to a user's computer through any kind of network, including a local area network (LAN) or a wide area network (WAN), or it may be connected to an external computer (for example, connected by using Internet provided by an Internet service provider).

The flowchart and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the drawings. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. In some cases, the name of the module does not constitute a limitation on the unit itself.

The functions described herein above may be performed at least partly by one or more hardware logic components. For example, without limitation, example types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium would include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, Example 1 provides a method for displaying live stream data, including: displaying, in response to a live start operation, a live streaming picture of a current user in a live streaming page, where the current user is a streamer of a live stream corresponding to the live streaming page; displaying, in the live streaming page, a data panel of the live stream in response to a data displaying operation, where the data panel is configured to display at least part of live stream data of the live stream.

According to one or more embodiments of the present disclosure, Example 2 is according to the method of Example 1, where the data panel includes a first data panel and/or a second data panel, and displaying, in response to a data displaying operation, the data panel of the live stream in the live streaming page includes at least one of: displaying, in response to a first data displaying operation, a first data panel of the live stream in the live streaming page, where the first data panel is configured to display at least part of the live stream data of the live stream; displaying, in response to a second data displaying operation, a second data panel of the live stream in the live streaming page, where the second data panel is configured to display data details of the live stream data.

According to one or more embodiments of the present disclosure, Example 3 is according to the method of Example 2, where the first data displaying operation includes a first trigger operation and/or a second trigger operation, the first trigger operation includes a swiping operation in a first direction in a preset region of the live streaming page, and the second trigger operation includes a tap operation acting in a live streaming information region of the live streaming page.

According to one or more embodiments of the present disclosure, Example 4 is according to the method of Example 3, where the second triggering operation acts in a preset sub-region of the live streaming information region, and the preset sub-region is configured to switch to display part of the live stream data of the live stream.

According to one or more embodiments of the present disclosure, Example 5 is according to the method of Example 2, where displaying the first data panel of the live stream in the live streaming page includes: displaying the first data panel of the live stream in a first panel region of the live streaming page, and canceling the display of live streaming information displayed in a live streaming information region of the live streaming page, where an overlapping region exists between the first panel region and the live streaming information region.

According to one or more embodiments of the present disclosure, Example 6 is based on the method of Example 2, where after displaying the first data panel of the live stream in the live streaming page, the method further includes: canceling the display of the first data panel, in response to a display cancelation operation for the first data panel, the display cancelation operation including a swiping operation in a second direction in the first data panel and/or a trigger operation for a display cancelation control of the first data panel.

According to one or more embodiments of the present disclosure, Example 7 is based on the method of Example 3, where the second data displaying operation acts in the first data panel, and displaying the second data panel of the live stream in the live streaming page includes: displaying the second data panel of the live stream in a second panel region of the live streaming page, and canceling the display of the first data panel.

According to one or more embodiments of the present disclosure, Example 8 is based on the method of any one of Examples 1 to 7, where the data panel further displays first prompt information and/or second prompt information, the first prompt information is configured to prompt data change of the live stream data, and the second prompt information is configured to prompt the current user to execute a target interaction event corresponding to the second prompt information.

According to one or more embodiments of the present disclosure, Example 9 is based on the method of Example 8, where the first prompt information, when displayed in a first data panel, is configured to trigger execution of a second data displaying operation.

According to one or more embodiments of the present disclosure, Example 10 is based on the method of Example 8, where after displaying the data panel of the live stream in the live streaming page, the method further includes: displaying, in response to a third trigger operation for the second prompt information, an event panel of the target interaction event in the live streaming page, where the event panel is configured to execute the target interaction event by the current user.

According to one or more embodiments of the present disclosure, Example 11 provides an apparatus for displaying live stream data, including: a picture displaying module configured to display, in response to a live start operation, a live streaming picture of a current user in a live streaming page, where the current user is a streamer of a live stream corresponding to the live streaming page; a data panel displaying module configured to display, in response to a data displaying operation, a data panel of the live stream in the live streaming page, where the data panel is configured to display at least part of live stream data of the live stream.

According to one or more embodiments of the present disclosure, Example 12 provides an electronic device, including: one or more processors; a memory for storing one or more programs which, when executed by the one or more processors, cause the one or more processors to implement the method for displaying live stream data according to any one of Examples 1 to 10.

According to one or more embodiments of the present disclosure, Example 13 provides a computer readable storage medium having a computer program stored thereon, the program, when executed by a processor, implements the method for displaying live stream data according to any one of Examples 1 to 10.

According to one or more embodiments of the present disclosure, Example 14 provides a computer program product which, when executed by a computer, implements the method for displaying live stream data according to any one of Examples 1 to 10.

The above description is only preferred embodiments of the present disclosure, and an explanation of the technical principles employed. Those skilled in the art should understand that the disclosure scope involved in the present disclosure is not limited to the technical solutions formed by the specific combination of the above technical features, but also covers other technical solutions formed by any combination of the above technical features or their equivalent features without departing from the above disclosure concept. For example, a technical solution formed by replacing the above features with technical features with similar functions disclosed in the present disclosure (but not limited to).

In addition, although the operations are depicted in a particular order, this should not be understood as requiring the operations to be performed in the particular order shown or in a sequential order. Under certain circumstances, multitasking and parallel processing may be advantageous. Likewise, although the above discussion contains a number of specific implementation details, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only example forms of implementing the claims.

## Claims

1. A method for displaying live stream data, comprising:
displaying, in response to a live start operation, a live streaming picture of a current user in a live streaming page, wherein the current user is a streamer of a live stream corresponding to the live streaming page;
displaying, in response to a data displaying operation, a data panel of the live stream in the live streaming page, wherein the data panel is configured to display at least part of live stream data of the live stream.

2. The method according to claim 1, wherein the data panel comprises a first data panel and/or a second data panel, and displaying, in response to the data displaying operation, the data panel of the live stream in the live streaming page comprises at least one of:
displaying, in response to a first data displaying operation, a first data panel of the live stream in the live streaming page, wherein the first data panel is configured to display at least part of the live stream data of the live stream;
displaying, in response to a second data displaying operation, a second data panel of the live stream in the live streaming page, wherein the second data panel is configured to display data details of the live stream data.

3. The method according to claim 2, wherein the first data displaying operation comprises a first trigger operation and/or a second trigger operation, the first trigger operation comprises a swiping operation in a first direction in a preset region of the live streaming page, and the second trigger operation comprises a tap operation acting in a live streaming information region of the live streaming page.

4. The method according to claim 3, wherein the second trigger operation acts in a preset sub-region of the live streaming information region, and the preset sub-region is configured to switch to display part of the live stream data of the live stream.

5. The method according to claim 2, wherein displaying the first data panel of the live stream in the live streaming page comprises:
displaying the first data panel of the live stream in a first panel region of the live streaming page, and canceling the display of live streaming information displayed in a live streaming information region of the live streaming page, wherein an overlapping region exists between the first panel region and the live streaming information region.

6. The method according to claim 2, wherein after displaying the first data panel of the live stream in the live streaming page, further comprising:
canceling the display of the first data panel in response to a display cancelation operation for the first data panel, the display cancelation operation comprising a swiping operation in a second direction in the first data panel and/or a trigger operation for a display cancelation control of the first data panel.

7. The method according to claim 3, wherein the second data displaying operation acts in the first data panel, and displaying the second data panel of the live stream in the live streaming page comprises:
displaying the second data panel of the live stream in a second panel region of the live streaming page, and canceling the display of the first data panel.

8. The method according to any one of claims 1 to 7, wherein the data panel further displays first prompt information and/or second prompt information, the first prompt information is configured to prompt data change of the live stream data, and the second prompt information is configured to prompt the current user to execute a target interaction event corresponding to the second prompt information.

9. The method according to claim 8, wherein the first prompt information, when displayed in a first data panel, is configured to trigger execution of a second data displaying operation.

10. The method according to claim 8, wherein after displaying the data panel of the live stream in the live streaming page, further comprising:
displaying, in response to a third trigger operation for the second prompt information, an event panel of the target interaction event in the live streaming page, wherein the event panel is configured to execute the target interaction event by the current user.

11. An apparatus for displaying live stream data, comprising:
a picture displaying module configured to display, in response to a live start operation, a live streaming picture of a current user in a live streaming page, wherein the current user is a streamer of a live stream corresponding to the live streaming page;
a data panel displaying module configured to display, in response to a data displaying operation, a data panel of the live stream in the live streaming page, wherein the data panel is configured to display at least part of live stream data of the live stream.

12. An electronic device, comprising:
at least one processor; and
a memory communicatively connected to the at least one processor;
wherein the memory stores a computer program executable by the at least one processor, and the computer program is executed by the at least one processor to cause the at least one processor to perform the method for displaying live stream data according to any one of claims 1 to 10.

13. A computer readable storage medium storing computer instructions, wherein the computer instructions, when executed by a processor, implement the method for displaying live stream data according to any one of claims 1 to 10.

14. A computer program product comprising a computer program, wherein the computer program, when executed by a processor, implements the method for displaying live stream data according to any one of claims 1 to 10.
